# EUROPEAN PATENT SPECIFICATION

(11) **EP 2 939 971 B1**
(45) Date of publication and mention of the grant of the patent: **18.10.2017**
(21) Application number: 15160371.9
(22) Date of filing: 23.03.2015
(51) Int. Cl.: B66B 7/06

(54) **A TRAVELLING CABLE CLAMP ASSEMBLY, AN ELEVATOR ARRANGEMENT, AND A METHOD**
FÖRDERKABELKLEMMANORDNUNG, AUFZUGSANORDNUNG UND VERFAHREN
ENSEMBLE DE SERRAGE DE CÂBLE DE DÉPLACEMENT, AGENCEMENT D'ASCENSEUR ET PROCÉDÉ

(30) Priority: 29.04.2014 US 201414264768
(43) Date of publication of application: 04.11.2015
(73) Proprietor: Kone Corporation, 00330 Helsinki (FI)
(72) Inventor: Peacock, Mark, 11100 Riihimäki (FI); Backlund, Niki, 05800 Hyvinkää (FI)
(74) Representative: Glück Kritzenberger Patentanwälte PartGmbB

(56) References cited:
- JP-A- S55 156 177
- JP-U- S 581 063
- JP-U- S5 356 672

## Description

### Field

The present disclosure relates to a travelling cable clamp assembly, an elevator arrangement, and a method in the manufacture of an elevator, which elevator is, for example, an elevator to be installed in a building and applicable to passenger transport and/or freight transport, and in which method and in which elevator arrangement the elevator is/can be taken into service use already during its construction-time an elevator, in particular to an elevator, which is suitable for transporting passengers and/or goods.

### Background

In so-called jump-lifts, the elevator hoistway is taken into use already before the full length of the elevator hoistway has been completed. The top part of the elevator hoistway is constructed at the same time as an elevator car moving in the already completed bottom part of the elevator hoistway serves people on the lower floors of the building. In jump-lifts, the elevator car moving in the bottom part of the elevator hoistway is supported and moved during the construction-time use suspended on hoisting ropes that are supported by a supporting platform in the elevator hoistway, which ropes are moved with a hoisting machine that is usually supported on the supporting platform. Installation work is done in the parts of the elevator hoistway above this supporting platform.

Generally in jump lifts the elevator car moving in the lower parts of the elevator hoistway is supported by a movable supporting platform positioned above the car in the hoistway. Often the car is moved during construction-time use with a hoisting machine supported on this supporting platform, but alternative locations for the hoisting machine also exist. The installation work in the parts of the elevator hoistway above this supporting platform is performed from a movable platform or corresponding in the elevator hoistway, which installation work comprises, among other things, the installation of guide rails and electrification in the elevator hoistway. When the elevator hoistway under construction above the supporting platform has reached a sufficient stage of completion, the completed part of the elevator hoistway can be taken into use. In this case a jump lift is performed, where the supporting platform is raised and mounted to a higher position in the elevator hoistway.
A travelling cable is fixed to the car of a passenger transport elevator and/or freight transport elevator, via which travelling cable the elevator car is in connection with the elevator control center. The travelling cable is typically a flat cable and comprises electrical conductors and a load-carrying bearer surrounded by a protective envelope. The travelling cable is used for power transmission and with it the necessary electrical energy is supplied to the elevator car and with it data is transmitted between the signalling devices of the elevator car, such as car call pushbuttons, communication devices and displays, and also the control system of the elevator. The load-bearing part of the travelling cable is frequently a steel rope bearer, typically a 6-strand or 8-strand steel rope, which comprises a steel core and strands passing around it. The travelling cable is typically fixed at the first end of the rope bearer to the elevator car and at the second end to the elevator hoistway by a travelling cable clamp. Elevator safety codes require that travelling cables are supported by their integral steel ropes. In prior art, this is accomplished by stripping back the insulation and securing the ropes using proprietary clamps. A problem with known travelling cable clamp solutions with jump lifts has been that the travelling cable is ruined and unsafe to use. Especially in jump lifts, the travelling cable must be extended each time the supporting platform and the machine room are raised without cutting open the insulation.

The JP S53-56672 discloses a travelling cable clamp assembly according to the preamble of claim 1.

The object of the present invention is to solve drawbacks of known solutions. The object is solved with an assembly according to claim 1. Preferred embodiments are subject matter of the dependent claims.

### Brief description of Example Embodiments

At least some example embodiments solve previously described drawbacks of known solutions and problems discussed later. At least some example embodiments introduce a travelling cable assembly and a jump lift, which is improved in terms of clamping the travelling cable of a jump lift. It is an object, inter alia, to improve safety in using jump lift, particularly during jump time without stripping back the insulation of the travelling cable. At least some example embodiments are presented, inter alia, which facilitate allowing the travelling cable to be extended each time the supporting platform and the machine room are raised without cutting open the insulation and ruining the travelling cable.

During the process of extending the cable one or more, for example, two wedge clamps are used to manage the cable loop. Once the cable is in its new position the external "pinch" clamp is applied to the edges of the cable directly over the steel ropes inside the insulating jacket.

In order to comply with safety requirements a new type of travelling cable clamp has been designed which supports the cable from its integral steel ropes using a compression fitting which is applied on the outside of the cable insulation.

At least some example embodiments are directed to a new travelling cable clamp assembly fixing an elevator travelling cable to a fixing base, such as to a first movable support structure in the hoistway for supporting said at least one elevator unit movable in the hoistway, including at least an elevator car, said elevator being installed in a building and applicable to passenger transport and/or freight transport during the manufacture of an elevator. The travelling cable clamp assembly comprises a travelling cable, whose width is larger than its thickness in a cable transverse direction, comprising an insulating jacket with a first planar surface and a second planar surface, conductors for transmitting electrical energy and data between the elevator car and the fixing base, and one or more load-bearing elements of essentially the length of the travelling cable for fixing the travelling cable at its first end to the elevator car and at its second end to the fixing base, a first plate element being in touch with the first planar surface of the insulating jacket, a second plate element being in touch with the second planar surface of the insulating jacket, and space elements between the first and the second plate elements. The travelling cable clamp assembly comprises a gap through which said travelling cable passes and in which gap said travelling cable is arranged to be locked in its position between the first plate element and the second plate element by pressing said first and second plate elements to the edges of the travelling cable directly over the load-bearing elements inside the insulating jacket without cutting open the insulation jacket.

In at least some example embodiments, the assembly comprises an adjustable lock, such as bolts and nuts, by which means the travelling cable is arranged to be pinched in its position between the first plate element and the second plate element.

In at least some example embodiments, the travelling cable is continuously extendable in its length between the elevator car and the fixing base, such as the first movable support structure in the hoistway for supporting said at least one elevator unit movable in the hoistway including at least an elevator car.

In at least some example embodiments, the travelling cable is fed into the elevator by discharging the cable from a cable reel rotating *in situ,* on a reeling rack placed in the vicinity, such as on the top of the first movable support structure in the hoistway, for instance.

In at least some example embodiments, the first plate element and said second plate elements have inwards open hollow cavities for receiving said travelling cable, and the inwards open hollow cavities are fitted to pass against the insulating jacket with the first planar surface and the second planar surface of said travelling cable.

In at least some example embodiments, the space element is an elongated planar element with a rectangular cross section and the thickness of the space element between said first plate element and said second plate element is greater than the diameter of the load-bearing element of the travelling cable.

In at least some example embodiments, the travelling cable clamp assembly comprises a clamp fixing plate where said first plate element is fixed.

In at least some example embodiments, the travelling cable clamp assembly comprises a clamp fixing plate comprising one or more wedge clamps for managing the cable loop.

In at least some example embodiments, the first and second plate elements, the space elements, the wedge clamps, and the adjustable lock is made of metallic material, for example, steel or aluminum.

In at least some example embodiments, the first plate element, the second plate element, the space elements, and/or the wedge clamps are made of non-metallic material, such as glass or carbon fiber-reinforced polymer composite material. Hence the travelling cable clamp can be made more lightweight.

At least some example embodiments are directed to a new elevator arrangement, said elevator being installed in a building and applicable to passenger transport and/or freight transport during the manufacture of an elevator, comprising an elevator hoistway, at least one elevator unit movable in the hoistway, including at least an elevator car, a first movable support structure in the hoistway for supporting said at least one elevator unit movable in the hoistway, a travelling cable, whose width is larger than its thickness in a cable transverse direction, comprising an insulating jacket with a first planar surface and a second planar surface, conductors for transmitting electrical energy and data between the elevator car and the fixing base, such as the first movable support structure in the hoistway for supporting said at least one elevator unit movable in the hoistway, and one or more load-bearing elements of essentially the length of the travelling cable for fixing the travelling cable at its first end to the elevator car and at its second end to the fixing base, and a travelling cable clamp. The travelling cable is fixed to the fixing base, such as to the first movable support structure in the hoistway for supporting said at least one elevator unit movable in the hoistway by the travelling cable clamp assembly described above.

In at least some example embodiments, the first movable support structure in the hoistway for supporting said at least one elevator unit movable in the hoistway comprises an elevator control center and a hoisting machine.

At least some example embodiments are directed to a method of constructing an elevator, which elevator has been arranged to comprise during construction time an elevator hoistway, at least one elevator unit movable in the hoistway, including at least an elevator car, a first movable support structure in the hoistway above the elevator car, for supporting said at least one elevator unit, a travelling cable for transmitting electrical energy and data between the elevator car and the fixing base, such as the first movable support structure, and a travelling cable clamp assembly, in which method at least the following are performed:
a) the elevator car is used for transporting passengers and/or goods, and thereafter
b) the first movable support structure is lifted higher in the hoistway, and thereafter
c) the elevator car is used again for transporting passengers and/or goods.

In at least some example embodiments, the method further comprises an operation x wherein the travelling cable clamp fixing the travelling cable to the fixing base, such as to the first movable support structure is released and the travelling cable is extended in its length, the travelling cable being continuously extendable in its length between the elevator car and the fixing base, and wherein the travelling cable is fixed to its fixing base by the travelling cable clamp assembly as described above.

In at least some example embodiments, in operation x, a travelling cable is set to extend in the hoistway, for example, by dropping it into the hoistway, and by discharging the cable from a cable reel rotating *in situ,* on a reeling rack placed in the vicinity, such as on top of the first movable support structure in the hoistway.

In at least some example embodiments, operation x is performed plural times to stepwise make more room below the first movable support structure, and after performing operation x, where the second support structure is moved from an earlier mounting position above the roof structure upwards to a higher mounting position in the hoistway for a subsequent operation x, after which operation x is performed again.

The elevator as described anywhere above is, for example, but not necessarily, installed inside a building. The car is, for example, arranged to serve two or more landings. The car, for example, is arranged to respond to calls from landing(s) and/or destination commands from inside the car so as to serve persons on the landing(s) and/or inside the elevator car. For example, the car has an interior space suitable for receiving a passenger or passengers.

The above mentioned embodiments can be combined with each other arbitrarily as long this is technically possible.

In at least some example embodiments, any cutting open of the insulation can be avoided so as to prevent any unsafe use of the travelling cable.

### Brief description of the drawings

In the following, at least some example embodiments will be described in more detail by way of example and with reference to the attached drawings, in which
Figure 1 illustrates schematically an elevator arrangement according to at least some example embodiments implementing a method according to at least some example embodiments.
Figure 2 illustrates a travelling cable clamp fixed in a fixing base according to at least some example embodiments.
Figure 3 illustrates schematically a cross section of the travelling cable clamp assembly according to at least some example embodiments.
Figure 4 illustrates a travelling cable clamp assembly according to at least some example embodiments for the elevator arrangement of Figure 1.

### Detailed description

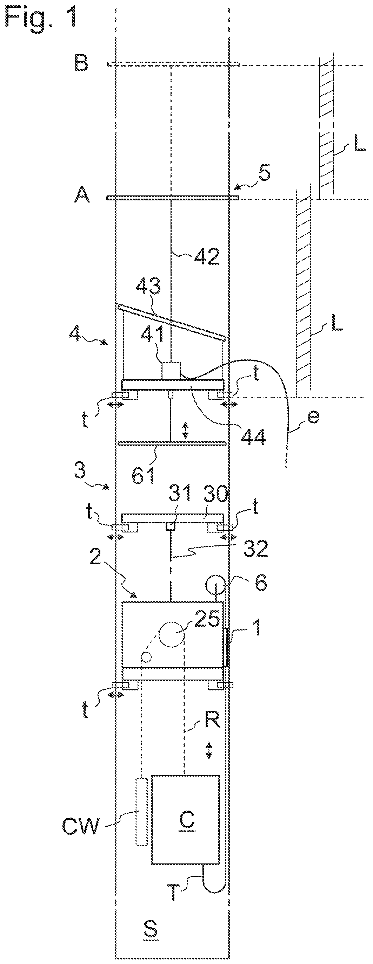

In Figure 1 it is illustrated, in at least some example embodiments, where the elevator arrangement has been arranged to comprise during construction time a hoistway S, and an elevator unit movable in the hoistway S, the elevator unit being an elevator car C for transporting passengers and/or goods. The elevator arrangement may also comprise additionally other movable elevator units such as the counterweight CW, as depicted. The elevator arrangement further comprises a first movable support structure 2 in the hoistway above the elevator car C, for supporting said at least one elevator unit C, CW, in this case with a roping R connected between elevator unit(s) and the support structure 2. The elevator arrangement further comprises a roof structure 4, separate from the movable support structure 2, in the hoistway S above the support structure 2, and a lifting arrangement 41, 42, 5 in the hoistway S for lifting the movable roof structure 4 higher in the hoistway S. The roof structure 4 is a movable roof structure, and the lifting arrangement 41, 42, 5 comprises a second movable support structure 5 mounted in the hoistway S above the movable roof structure 4, the lifting arrangement 41, 42, 5 being arranged to take support from the second movable support structure 5 for said lifting of the movable roof structure 4. Roof structure 4 can be lifted upwards separately from the movable support structure 2 so as to make room between them. In the method the elevator car C is used for transporting passengers and/or goods (a). The top part of the elevator hoistway S above the support structure 2 can be constructed at the same time as an elevator car C moving in the bottom part of the elevator hoistway S already serves people on the lower floors of the building. When the elevator hoistway under construction above the first movable support structure 2 has reached a sufficient stage of completion, the completed part of the elevator hoistway S can be taken into use. In this case elevator car is taken out of said use and a jump-lift is performed, wherein the first movable support structure 2 is lifted (b) and mounted to a higher position in the elevator hoistway. After this the elevator car C is taken back to said use for transporting passengers and/or goods (c). Figure 1 also shows a third support structure 3 between the roof structure 4 and the supports structure 2 wherefrom support is taken for the lift of the first support structure 2 in b. The lifting of the first support structure 2 can be performed with a lifting device 31 pulling the first support structure 2 with a rope system 32 up. The lifting device may be in unity of the first or third support structure. However, the lifting of the support structure 2 need not be carried in this particular fashion as alternative arrangements exist. Before b the third support structure 3 can be lifted higher in the hoistway taking support from the roof structure 4. For this purpose the movable roof structure 4 may comprise a lifting device connected/connectable via a rope system to the third support structure 3. Figure 1 also shows a movable working platform 61 below the movable roof structure 4, wherefrom elevator structures are installed by working on the working platform during said use of car C. The working platform is moved by taking support from the movable roof structure 4 mounted above the working platform 61. For enabling the lifting of the third movable support structure 3 the movable working platform 61 may be connected to the third movable support structure 3 for the time of the lifting. The lifting device 61 need not be positioned in unity of the movable roof structure, but instead it could be positioned in unity of the working platform 61.

When a suitable number of jump-lifts has been performed (cycles of operations a to c), for example the support structure 2 has become close to said roof structure 4, the movable roof structure 4 is lifted higher in the hoistway S so as to make more room below it. For this purpose the roof structure 4 is made to be a movable roof structure, having a support t transferrable to a state where they don't block vertical movement of the movable roof structure 4, such as laterally extendable support elements.

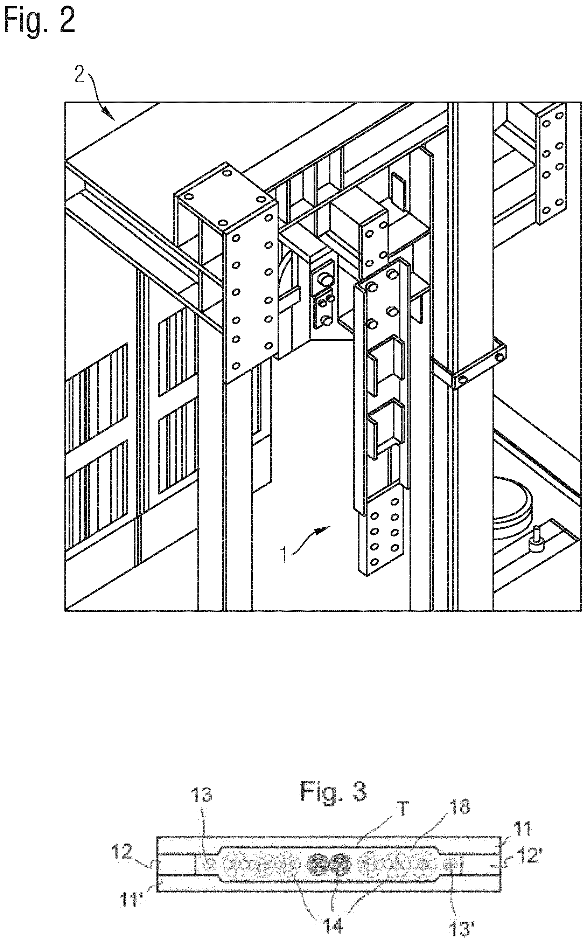

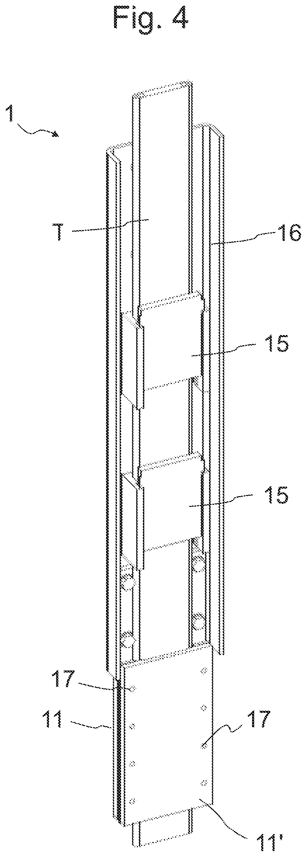

Figure 2 illustrates a travelling cable clamp 1 fixed to the first movable support structure 2 according to at least some example embodiments. Figure 4 illustrates a travelling cable clamp assembly according to at least some example embodiments for the elevator arrangement of Figure 1. In operation x the travelling cable clamp 1 fixing the travelling cable T to the fixing base, such as the first movable support structure 2 supporting the hoisting machine 25, is opened and the travelling cable T is extended in its length, the travelling cable T being continuously extendable in its length between the elevator car C and the fixing base. In operation x a travelling cable T is set to extend in the hoistway S, for example, by dropping it into the hoistway S, and by discharging the cable T from a cable reel 6 rotating *in situ,* on a reeling rack placed in the vicinity, such as on top of the first movable support structure 2 in the hoistway S. In operation x after the travelling cable T is extended to its length corresponding to the position of the first movable support structure 2 in the hoistway S the travelling cable T is fixed to its fixing base, such as the first movable support structure 2 by the travelling cable clamp 1.

Operation x is performed plural times to stepwise make more room below the first movable support structure, and after performing operation x, a operation is performed, where the second support structure 5 is moved from an earlier mounting position above the roof structure upwards to a higher mounting position in the hoistway for a subsequent x, after which the x is performed again.

The movable roof structure 4 is lifted in the hoistway S taking support for the lift from a second movable support structure 5 mounted in the hoistway S above the roof structure 4. As illustrated, support t has been transferred to unblocking state prior to the lifting of the movable roof structure 4. The operation is done when support structure 2 has been raised so close to roof structure 4 that more room is needed between them. Another reason for lifting the movable roof structure 4 could be that installation work of elevator components needs to be continued above the current level of the roof structure 4. The lifting of the movable roof structure 4 is arranged to be done without substantial dismantling of the roof structure 4, which is can be enabled by support t.

The movable roof structure 4 is lifted with a lifting arrangement 41, 42, 5 which is in the hoistway S. The lifting arrangement 41, 42, 5 comprises the second movable support structure 5, and, for example, also a rope 42, and a lifting device 41. Alternatively, other lifting structure could be used instead of rope 42 and device 41. For enabling a subsequent operation the second movable support structure 5 is mounted in the hoistway S in a mounting position A or B above the movable roof structure 4 as illustrated in Figure 1. This mounting can be done at a suitable moment. In Figure 1 mounting position A illustrates a mounting position where the second movable support structure 5 is to be mounted possibly for the first time. Mounting position B illustrates a mounting position where the second movable support structure 5 is to be mounted after the mounting position A, thus being higher than mounting position A. In both cases the lifting arrangement can be made to extend to the level of mounting position A or B for a subsequent operation by lifting the second movable support structure 5 to the level of its mounting position A or B from its earlier position. This can be done by performing operation e, for instance. The operation can be performed once, or alternatively plural times to stepwise make more room below the roof structure 4. In case of plural operations, after performing a preceding operation, the lifting arrangement is lifted to extend to the level of mounting position B for a subsequent operation. This is done, for example, by operation e where the second movable support structure 5 is moved from its earlier mounting position A upwards to a higher mounting position B in the hoistway S.

In operation e the lifting arrangement 41, 42, 5 is lifted to extend to the level of mounting position A or B for a subsequent operation. Said level of the mounting position A, B is above the level of the movable roof structure 4. This lifting is, for example, done at least partially manually by a person, for example, by carrying or by pulling up with a rope or equivalent. Thus, no complicated lifting system is needed to move the point of support higher in the hoistway S. The person can climb ladders or stairs L up to the level of the intended mounting position A or B of the second movable support structure 5. The person can carry the second movable support structure 5 up to this level (in one piece or in several) and mount it into position for lifting.

For example, after each operation the hoistway is sealed water-proof with the roof structure 4, e.g. by extending a water-proof membrane to extend up to the surface of the hoistway S. After the lifting of the movable roof structure 4, an operation cycle comprising operations a to c can be performed once or plural times as there is now more room between them. After said cycle/cycles, operations e and x can be performed again. By performing the sequence of operations (n times (a + b + c) + e + x) suitable number of times, the structures 2 and 4 can be lifted as high in the hoistway as needed.

As mentioned, the second support structure 5 is movable. This means that it is demountably supportable in different vertical positions in the hoistway S. It can be made to be in form of a beam resting, e.g. resting freely or in releasably fixed manner, on top of stationary supporting structures of the elevator, such as upper surfaces of structures of the hoistway and a sill of the landing door opening. The roof structure 4 is movable, as well. This means that it is demountably supportable in different vertical positions in the hoistway. For this purpose, the construction-time elevator has, for example, been arranged to comprise a support t for supporting the roof structure 4 stationary in the elevator hoistway S, which support t is transferrable between state I where the roof structure 4 is supported stationary and state II where the roof structure 4 is not supported stationary. When in state II, the support t does not block upwards directed vertical movement of the roof structure in the hoistway S. The first support structure 2 and/or the third support structure 3, for example, are made movable in corresponding manner as the movable roof structure 4.

Figure 3 illustrates schematically a cross section of the travelling cable clamp assembly according to at least some example embodiments. The travelling cable clamp assembly comprises a travelling cable T, whose width is larger than its thickness in a cable transverse direction, comprising an insulating jacket 18 with a first planar surface and a second planar surface, conductors 14 for transmitting electrical energy and data between the elevator car and the fixing base, and one or more load-bearing elements 13, 13' of essentially the length of the travelling cable T for fixing the travelling cable at its first end to the elevator car C and at its second end to the fixing base 2, a first plate element 11 being in touch with the first planar surface of the insulating jacket 18, a second plate element 11' being in touch with the second planar surface of the insulating jacket 18, and space elements 12, 12' between the first and the second plate elements 11, 11'. The travelling cable clamp assembly comprises a gap through which said travelling cable passes and in which gap said travelling cable is arranged to be locked in its position between the first plate element 11 and the second plate element 11' by pressing said first and second plate elements 11, 11' to the edges of the travelling cable directly over the load-bearing elements 13, 13' inside the insulating jacket 18 without cutting open the insulation jacket 18.

The assembly comprises an adjustable lock 17, such as bolts and nuts, by which the travelling cable T is arranged to be pinched in its position between the first plate element 11 and the second plate element 11'.

The travelling cable T is continuously extendable in its length between the elevator car C and the fixing base, such as the first movable support structure 2 in the hoistway S for supporting said at least one elevator unit movable in the hoistway S including at least an elevator car C. The travelling cable T is fed into the elevator by discharging the cable T from a cable reel 6 shown in Figure 1 rotating *in situ,* on a reeling rack placed on the top of the first movable support structure 2 in the hoistway S.

The first plate element 11 and said second plate element 11' have inwards open hollow cavities for receiving said travelling cable T, and the inwards open hollow cavities are fitted to pass against the insulating jacket 18 with the first planar surface and the second planar surface of said travelling cable T.

The space element 12, 12' is an elongated planar element with a rectangular cross section and the thickness of the space element 12, 12' between said first plate element 11 and said second plate element 11' is greater than the diameter of the load-bearing element 13, 13' of the travelling cable T. The travelling cable clamp assembly comprises a clamp fixing plate 16 where the first plate element 11 is fixed. The travelling cable clamp assembly also comprises a clamp fixing plate 16 comprising one or more wedge clamps 15 for managing the cable loop.

The first and second plate elements 11, 11', the space elements 12, 12', the wedge clamps 15, and the adjustable lock 17 is made of metallic material, for example, steel or aluminum. In at least one example embodiment, the first plate element 11, the second plate element 11', the space elements 12, 12', and/or the wedge clamps 15 are made of non-metallic material, such as plastics, glass or carbon fiber-reinforced polymer composite material.

The support t, for example, comprises laterally extendable support elements, as depicted in drawings, for instance. When in supporting state I, each support element may extend on top of a stationary supporting structure of the elevator, such as an upper surface of an elevator hoistway structure or a sill of the landing door opening. For this purpose, the hoistway S may be designed to have at intervals supporting structures. For instance, pockets can be made in the hoistway walls. The support elements can be formed to be laterally extendable and retractable back to non-extended state by linear movement or by pivoting. The support elements, for example, can be lockable into extended and/or contracted state. In Figure 1, the support elements are movable between said positions by linear movement. The support t could have alternatively had a different design. An example alternative design would be such that the support t is a gripper arranged to grip elevator guide rails when in state I and not grip when in state II. Such a gripper would, for example, be in the form of a wedging-type gripper, having a wedging-part arranged to wedge between guide rail and an upwardly tapering housing surface of the gripper if the gripper moves downwards, thus utilizing a structure well known from elevator safety gear -devices.

As mentioned, the second movable support structure 5, for example, is portable by a person or includes plural portable by a person parts detachably connected. Thus, it can be carried or pulled by person in one piece or several to the level A or B which is the new mounting position thereof from a lower level. The second movable support structure 5, for example, is in the form of a beam. Thus it is simple and can be made rigid and reliable with low weight. A light but rigid beam structure 5 can be made from wood and/or metal. The weight of the second movable support structure is at most 35 kg, for example, at most 25 kg, for example, at most 20 kg in weight or the second support structure includes of plural detachably connected parts each having a weight of 35 kg at most for example, at most 25 kg for example, at most 20 kg.

The movable roof structure is, for example, such that a lifting device 41 for lifting the roof structure 4 is in unity of the movable roof structure 4. Furthermore, the roof structure 4 may also comprise a lifting device for lifting a working platform 61 below roof structure 4, for example, with roping. The movable roof structure 4, for example, also comprises a power supply f to the lifting device(s), the power supply being, for example, electrical power supply line and the lifting device 41 being an electrical lifting device. Thus the lifting device 41 can be accessed for used or maintenance easily. Also, power feed is in this way simple and, for example, provides power for multiple devices with only one line. The lifting device 41 is, for example, accessible via the platform and for example, fixed to the platform 44. The lifting device 41 is, for example, remotely controllable, e.g. via a control cable or a wireless connection.

Parts 32, 42 are, for example, ropes, such as metal ropes, but an equivalent flexible member could be used, such as a belt or chain. Correspondingly, roping R could be formed of ropes or equivalent components. With term portable structure it is meant structure that can be lifted manually by a person, particularly pulled up or carried by a person. In at least some example embodiments described, the end of the rope 42 is connected to the structure 5 such that hoisting ratio is 1:1. However, this is not necessary as alternatively the rope 42 could be connected to the structure 5 by a pulley(s) such that 2:1 hoisting ratio is achieved or more pulleys such that even higher ratio is achieved. It is to be understood that the above description and the accompanying figures are only intended to illustrate example embodiments. It will be obvious to a person skilled in the art that the inventive concepts can be implemented in various ways. The present disclosure and its example embodiments are not limited to the examples described above but may vary within the scope of the claims.

## Claims

1. A travelling cable clamp assembly fixing an elevator travelling cable (T) to a fixing base, such as to a first movable support structure (2) in the hoistway for supporting said at least one elevator unit (C, CW) movable in the hoistway, including at least an elevator car (C), said elevator being installed in a building and applicable to passenger transport and/or freight transport during the manufacture of an elevator, which assembly comprises a travelling cable (T), **characterized in**
- **that** the width of the travelling cable (T) is larger than its thickness in a cable transverse direction, comprising an insulating jacket (18) with a first planar surface and a second planar surface, conductors for transmitting electrical energy and data between the elevator car (C) and the fixing base, and one or more load-bearing elements of essentially the length of the travelling cable (T) for fixing the travelling cable (T) at its first end to the elevator car (C) and at its second end to the fixing base, and
- **that** the assembly further comprises:
- a first plate element being in touch with the first planar surface of the insulating jacket (18),
- a second plate element (11') being in touch with the second planar surface of the insulating jacket (18),
wherein the travelling cable clamp assembly comprises a gap through which said travelling cable (T) passes and in which gap said travelling cable (T) is arranged to be locked in its position between the first plate element and the second plate element (11') by pressing said first and second plate elements (11') to the edges of the travelling cable (T) directly over the load-bearing elements inside the insulating jacket (18) without cutting open the insulation jacket (18).

2. A travelling cable clamp assembly according to claim 1, wherein the assembly further comprises adjustable locking, such as bolts and nuts, by which the travelling cable (T) is arranged to be pinched in its position between the first plate element (11) and the second plate element (11').

3. A travelling cable clamp assembly according to claim 1 or 2, wherein said travelling cable (T) is continuously extendable in its length between the elevator car (C) and the fixing base, such as the first movable support structure (2) in the hoistway (S).

4. A travelling cable clamp assembly according to one of the preceding claims, wherein said travelling cable (T) is fed into the elevator by discharging the cable from a cable reel rotating in situ on a reeling rack placed in the vicinity of the first movable support structure (2) in the hoistway (S).

5. A travelling cable clamp assembly according to one of the preceding claims, wherein said first plate element (11) and said second plate element (11') have inwards open hollow cavities for receiving said travelling cable (T), and the inwards open hollow cavities are fitted to pass against the insulating jacket (18) with the first planar surface and the second planar surface of said travelling cable.

6. A travelling cable clamp assembly according to one of the preceding claims, wherein the assembly further comprises one or more space elements being an elongated planar element with a rectangular cross section with the thickness of the space element between said first plate element (11) and said second plate element (11') greater than the diameter of the load-bearing element of the travelling cable. (T).

7. A travelling cable clamp assembly according to one of the preceding claims, wherein the travelling cable clamp assembly comprises a clamp fixing plate where said first plate element (11) is fixed with a fixing device, such as bolts and nuts.

8. A travelling cable clamp assembly according to one of the preceding claims, wherein the travelling cable clamp assembly comprises a clamp fixing plate comprising one or more wedge clamps for managing the cable loop.

9. A travelling cable clamp assembly according to one of the preceding claims, wherein the fixing plate, the first and second plate elements (11, 11'), the space elements, the wedge clamps, and the adjustable lock is made of metallic material, for example, steel or aluminum.

10. A travelling cable clamp assembly according to one of the preceding claims, wherein the fixing plate, the first plate element, the second plate element (11'), the space elements, and/or the wedge clamps are made of non-metallic material, such as plastics, glass or carbon fiber-reinforced polymer composite material.

11. An elevator arrangement, said elevator being installed in a building and applicable to passenger transport and/or freight transport during the manufacture of an elevator, comprising:
- an elevator hoistway (S),
- at least one elevator unit (C, CW) movable in the hoistway (S), including at least an elevator car (C),
- a first movable support structure (2) in the hoistway (S) for supporting said at least one elevator unit movable in the hoistway,
- a travelling cable (T), whose width is larger than its thickness in a cable transverse direction, comprising an insulating jacket with a first planar surface and a second planar surface, conductors for transmitting electrical energy and data between the elevator car (C) and the fixing base, such as the first movable support structure (2) in the hoistway (S) for supporting said at least one elevator unit (C, CW) movable in the hoistway (S), and one or more load-bearing elements of essentially the length of the travelling cable (T) for fixing the travelling cable (T) at its first end to the elevator car (C) and at its second end to the fixing base,
- a travelling cable clamp,
wherein the travelling cable (T) is fixed to the fixing base, such as to the first movable support structure (2) in the hoistway (S) by the travelling cable clamp assembly according to one of the preceding claims.

12. An elevator arrangement according to claim 11, **characterized in that** the first movable support structure (2) in the hoistway (S) for supporting said at least one elevator unit (C, CW) movable in the hoistway (S) comprises an elevator control center and a hoisting machine.

13. A method in constructing an elevator, which elevator has been arranged to comprise during construction time
- an elevator hoistway (S),
- at least one elevator unit (C, CW) movable in the hoistway (S), including at least an elevator car,
- a first movable support structure (2) in the hoistway (S)above the elevator car, for supporting said at least one elevator unit (C, CW),
- a travelling cable (T) for transmitting electrical energy and data between the elevator car and the fixing base, such as the first movable support structure (2),
- travelling cable clamp
in which method at least the following are performed:
a) the elevator car is used for transporting passengers and/or goods, and thereafter
b) the first movable support structure (2) is lifted higher in the hoistway (S), and thereafter
c) the elevator car is used again for transporting passengers and/or goods,
wherein the method further comprises operation x wherein the travelling cable clamp fixing the travelling cable (T) to the fixing base, such as to the first movable support structure (2) is released and the travelling cable (T) is extended in its length, the travelling cable (T) being continuously extendable in its length between the elevator car and the fixing base, and wherein the travelling cable (T) is fixed to its fixing base by the travelling cable clamp assembly according to one of claims 1 to 10.

14. The method according to the previous claim 13, wherein operation x a travelling cable (T) is set to extend in the hoistway (S), for example, by dropping it into the hoistway (S), and by discharging the cable (T) from a cable reel rotating in situ on a reeling rack placed in the vicinity, for example, on top of the first movable support structure (2) in the hoistway (S).

15. The method according to claim 13 or 14, wherein operations a-c, x are performed plural times to stepwise make more room below the first movable support structure (2), and after performing operations a-c, x, an operation is performed, where the second support structure (5) is moved from an earlier mounting position above the roof structure upwards to a higher mounting position in the hoistway (S) for subsequent operations a-c, x, after which at least the operations a-c, and x are performed again.

## Patentansprüche

1. Laufkabel-Klemmenanordnung zur Befestigung eines Aufzuglaufkabels (T) an einer Befestigungsbasis, wie zum Beispiel an einer ersten bewegbaren Tragstruktur (2) in dem Hebeweg zum Tragen wenigstens einer Aufzugseinheit (C, CW), die in dem Hebeweg beweglich ist, umfassend wenigstens eine Aufzugskabine (C), welcher Aufzug in einem Gebäude installiert ist und für den Passagier und/oder Frachttransport während der Herstellung eines Aufzugs geeignet ist, welche Anordnung ein Laufkabel (T) enthält, **dadurch gekennzeichnet,**
- **dass** die Breite des Laufkabels (T) in Querrichtung des Kabels größer als seine Dicke ist, umfassend eine Isolierhülle (18) mit einer ersten planen Oberfläche und einer zweiten planen Oberfläche, elektrischen Leitern zum Übermitteln elektrischer Energie und von Daten zwischen der Aufzugskabine (C) und der Befestigungsbasis, und einem oder mehreren lastaufnehmenden Elementen, die im Wesentlichen die Länge des Laufkabels (T) haben, zur Befestigung des Laufkabels (T) an seinem ersten Ende an der Aufzugskabine (C) und an seinem zweiten Ende an der Befestigungsbasis und
- **dass** die Anordnung weiterhin folgende Merkmale enthält:
- ein erstes Plattenelement, welches in Verbindung mit der ersten planen Oberfläche der Isolierhülle (18) steht,
- ein zweites Plattenelement (11'), welches in Verbindung mit der zweiten planen Oberfläche der Isolierhülle (18) steht,
wobei die Laufkabel-Klemmenanordnung einen Spalt enthält, durch welchen das Laufkabel (T) hindurch passt, und in welchem Spalt das Laufkabel (T) in seiner Position zwischen dem ersten Plattenelement und dem zweiten Plattenelement (11') festgelegt werden kann, indem das erste und das zweite Plattenelement (11') gegen die Kanten des Laufkabels (T) direkt über die lastaufnehmenden Elemente innerhalb der Isolierhülle (18) gepresst werden, ohne die Isolierhülle (18) aufzuschneiden.

2. Laufkabel-Klemmenanordnung nach Anspruch 1, in welcher die Anordnung weiterhin eine einstellbare Verriegelung umfasst, wie zum Beispiel Bolzen und Nüsse, durch welche das Laufkabel (T) in seiner Position zwischen dem ersten Plattenelement (11) und dem zweiten Plattenelement (11') festgeklemmt werden kann.

3. Klemmenanordnung für ein Laufkabel nach Anspruch 1 oder 2, bei der das Laufkabel (T) in seiner Länge kontinuierlich zwischen der Aufzugskabine (C) und der Befestigungsbasis, wie der bewegbaren Tragstruktur (2) in dem Hebeweg (S), verlängerbar ist.

4. Klemmenanordnung für ein Laufkabel nach einem der vorhergehenden Ansprüche, in welcher das Laufkabel (T) in den Aufzug geführt wird durch Abgabe des Kabels von einer Kabeltrommel, die an der Baustelle auf einem Rollenständer rotiert, der in der Nähe der ersten bewegbaren Tragstruktur (2) in dem Hebeweg (S) angeordnet ist.

5. Laufkabel-Klemmenanordnung nach einem der vorhergehenden Ansprüche, in welcher das erste Plattenelement (11) und das zweite Plattenelement (11') nach innen offene hohle Ausnehmungen zur Aufnahme des Laufkabels (T) haben, und die nach innen offenen hohlen Ausnehmungen konzipiert sind, um gegen die Isolierhülle (18) mit der ersten planen Oberfläche und der zweiten planen Oberfläche des Laufkabels anzuliegen.

6. Laufkabel-Klemmenanordnung nach einem der vorhergehenden Ansprüche, in welcher die Anordnung weiterhin ein oder mehrere Abstandselemente aufweist, die in Form eines länglichen planaren Elements mit einem rechteckigen Querschnitt ausgebildet sind, wobei die Dicke des Abstandselements zwischen dem ersten Plattenelement (11) und dem zweiten Plattenelement (11') größer ist als der Durchmesser des lastaufnehmenden Elements des Laufkabels (T).

7. Laufkabel-Klemmenanordnung nach einem der vorhergehenden Ansprüche, in welcher die Laufkabel-Klemmenanordnung eine Klemmenbefestigungsplatte aufweist, auf der das erste Plattenelement (11) mit einer Befestigungseinrichtung festgelegt ist, wie zum Beispiel mit Bolzen und Nüssen.

8. Laufkabel-Klemmenanordnung nach einem der vorhergehenden Ansprüche, in welcher die Laufkabel-Klemmenanordnung eine Klemmenbefestigungsplatte aufweist, die eine oder mehrere Keilklemmen aufweist zum Handhaben der Kabelschlaufe.

9. Laufkabel-Klemmenanordnung nach einem der vorhergehenden Ansprüche, in welcher die Befestigungsplatte, das erste und zweite Plattenelement (11, 11'), die Abstandselemente, die Keilklemmen und die einstellbare Verriegelung aus metallischem Material hergestellt sind, zum Beispiel Stahl oder Aluminium.

10. Laufkabel-Klemmenanordnung nach einem der vorhergehenden Ansprüche, in welcher die Befestigungsplatte, das erste Plattenelement, das zweite Plattenelement (11'), die Abstandselemente und/oder die Keilklemmen aus nicht-metallischem Material wie zum Beispiel Kunststoff, Glas oder karbonverstärktem Polymerverbundmaterial hergestellt sind.

11. Aufzugsanordnung, welcher Aufzug in einem Gebäude installiert ist und für den Passagiertransport und/oder Frachttransport während der Herstellung eines Aufzugs konzipiert ist, umfassend:
- einen Aufzughebeweg (S),
- wenigstens eine Aufzugseinheit (C, CW), die in dem Hebeweg (S) bewegbar ist, umfassend wenigstens eine Aufzugskabine (C),
- eine erste bewegbare Tragstruktur (2) in dem Hebeweg (S), um die wenigstens eine in dem Hebeweg bewegbare Aufzugseinheit zu tragen,
- ein Laufkabel (T), dessen Breite in Querrichtung des Kabels größer ist als seine Dicke, umfassend eine Isolierhülle mit einer ersten planen Oberfläche und einer zweiten planen Oberfläche, elektrischen Leitern zum Übertragen elektrischer Energie und/oder von Daten zwischen der Aufzugskabine (C) und der Befestigungsbasis, wie zum Beispiel der ersten bewegbaren Tragstruktur (2) in dem Hebeweg (S), um die wenigstens eine Aufzugseinheit (C, CW), die in dem Hebeweg (S) bewegbar ist, zu tragen, und ein oder mehrere lastenaufnehmende Elemente, die im Wesentlichen die gleiche Länge wie das Laufkabel (T) haben, um das Laufkabel (T) an seinem ersten Ende an der Aufzugskabine (C) und an seinem zweiten Ende an der Befestigungsbasis zu befestigen,
- eine Laufkabelklemme,
wobei das Laufkabel (T) an der Befestigungsbasis befestigt ist, wie zum Beispiel an der ersten bewegbaren Tragstruktur (2) in dem Hebeweg (S) mittels der Laufkabel-Klemmenanordnung nach einem der vorhergehenden Ansprüche.

12. Aufzugsanordnung nach Anspruch 11, **dadurch gekennzeichnet, dass** die erste bewegbare Tragstruktur (2) in dem Hebeweg (S), um die wenigstens eine in dem Hebeweg (S) bewegbare Aufzugseinheit (C, CW) zu tragen, ein Aufzugsteuerungszentrum und eine Hebemaschine aufweist.

13. Verfahren zum Herstellen eines Aufzugs, welcher Aufzug konzipiert ist, um während der Konstruktionszeit folgende Merkmale zu enthalten:
- einen Aufzughebeweg (S),
- wenigstens eine in dem Hebeweg (S) bewegbare Aufzugseinheit (C, CW) umfassend wenigstens eine Aufzugskabine,
- eine erste bewegbare Tragstruktur (2) in dem Hebeweg (S) über der Aufzugskabine, zum Tragen der wenigstens einen Aufzugseinheit (C, CW),
- ein Laufkabel (T) zum Übertragen elektrischer Energie und von Daten zwischen der Aufzugskabine und der Befestigungsbasis, wie zum Beispiel der ersten bewegbaren Tragstruktur (2),
- eine Laufkabelklemme,
in welchem Verfahren wenigstens die folgenden Schritte durchgeführt werden:
a) die Aufzugskabine wird verwendet zum Transportieren von Passagieren und/oder Gütern, und danach
b) wird die erste bewegbare Tragstruktur (2) in dem Hebeweg (S) höher angehoben, und danach
c) wird die Aufzugskabine wieder zum Transportieren von Passagieren und/oder Gütern verwendet, wobei das Verfahren weiterhin den Schritt x enthält, in welchem die Laufkabelklemme, welche das Laufkabel (T) mit der Befestigungsbasis, wie zum Beispiel der ersten bewegbaren Tragstruktur (2) verbindet, freigegeben wird und das Laufkabel (T) verlängert wird, wobei das Laufkabel (T) zwischen der Aufzugskabine und der Befestigungsbasis kontinuierlich in seiner Länge verlängerbar ist, und wobei das Laufkabel (T) an seiner Befestigungsbasis befestigt wird durch die Laufkabel-Klemmenanordnung nach einem der Ansprüche 1 bis 10.

14. Verfahren nach Anspruch 13, in welchem im Schritt x ein Laufkabel (T) eingestellt wird, um in den Hebeweg (S) zu ragen, zum Beispiel indem es in den Hebeweg (S) herabgelassen wird, und indem das Kabel (T) von einer Kabeltrommel abgerollt wird, die in einer in der Nähe angeordneten Trommelhalterung an der Baustelle rotierbar ist, zum Beispiel auf der Oberseite der ersten bewegbaren Tragstruktur (2) in dem Hebeweg (S).

15. Verfahren nach Anspruch 13 oder 14, wobei die Schritte a-c und x mehrere Male durchgeführt werden, um schrittweise mehr Raum unter der ersten bewegbaren Tragstruktur (2) zu schaffen, und nachdem die Schritte a-c und x durchgeführt wurden, wird ein Schritt durchgeführt, in welchem die zweite Tragstruktur (5) von einer vorherigen Montageposition über der Dachstruktur nach oben zu einer höheren Montageposition in dem Hebeweg (S) bewegt wird, für nachfolgende Schritte a-c und x, wonach wenigstens die Schritte a-c und x wiederholt durchgeführt werden.

## Revendications

1. Ensemble de serrage de câble de déplacement fixant un câble de déplacement d'ascenseur (T) à une base de fixation, telle qu'à une première structure support mobile (2) dans la gaine pour supporter ladite au moins une unité d'ascenseur (C, CW) mobile dans la gaine, comportant au moins une cabine d'ascenseur (C), ledit ascenseur étant installé dans un bâtiment et applicable au transport de passagers et/ou transport de marchandises pendant la fabrication d'un ascenseur, ledit ensemble comprenant un câble de déplacement (T), **caractérisé**
- **en ce que** la largeur du câble de déplacement (T) est supérieure à son épaisseur dans une direction transversale de câble, comprenant une gaine isolante (18) avec une première surface plane et une seconde surface plane, des conducteurs pour transmettre l'énergie électrique et des données entre la cabine d'ascenseur (C) et la base de fixation, et un ou plusieurs éléments porteurs sensiblement de la longueur du câble de déplacement (T) pour fixer le câble de déplacement (T) au niveau de sa première extrémité à la cabine d'ascenseur (C) et au niveau de sa seconde extrémité à la base de fixation, et
- **en ce que** l'ensemble comprend en outre :
- un premier élément de plaque qui est en contact avec la première surface plane de la gaine isolante (18),
- un second élément de plaque (11') qui est en contact avec la seconde surface plane de la gaine isolante (18),
dans lequel l'ensemble de serrage de câble de déplacement comprend un espace à travers lequel ledit câble de déplacement (T) passe et dans lequel espace ledit câble de déplacement (T) est agencé pour être bloqué dans sa position entre le premier élément de plaque et le second élément de plaque (11') en pressant lesdits premier et second éléments de plaque (11') vers les bords du câble de déplacement (T) directement au-dessus des éléments porteurs à l'intérieur de la gaine isolante (18) sans ouvrir la gaine isolante (18).

2. Ensemble de serrage de câble de déplacement selon la revendication 1, dans lequel l'ensemble comprend en outre un blocage réglable, tels que des boulons et des écrous, qui permet d'agencer le câble de déplacement (T) pour être coincé dans sa position entre le premier élément de plaque (11) et le second élément de plaque (11').

3. Ensemble de serrage de câble de déplacement selon la revendication 1 ou 2, dans lequel ledit câble de déplacement (T) est déployable de manière continue sur sa longueur entre la cabine d'ascenseur (C) et la base de fixation, telle que la première structure support mobile (2) dans la gaine (S).

4. Ensemble de serrage de câble de déplacement selon une des revendications précédentes, dans lequel ledit câble de déplacement (T) est amené dans l'ascenseur en faisant sortir le câble d'un rouleau à câble tournant in situ sur une crémaillère d'enroulement placée à proximité de la première structure support mobile (2) dans la gaine (S).

5. Ensemble de serrage de câble de déplacement selon une des revendications précédentes, dans lequel ledit premier élément de plaque (11) et ledit second élément de plaque (11') ont des cavités creuses ouvertes vers l'intérieur pour recevoir ledit câble de déplacement (T), et les cavités creuses ouvertes vers l'intérieur sont installées pour passer contre la gaine isolante (18) avec la première surface plane et la seconde surface plane dudit câble de déplacement.

6. Ensemble de serrage de câble de déplacement selon une des revendications précédentes, dans lequel l'ensemble comprend en outre un ou plusieurs éléments d'espacement sous forme d'élément plan allongé avec une coupe transversale rectangulaire et avec l'épaisseur de l'élément d'espacement entre ledit premier élément de plaque (11) et ledit second élément de plaque (11') supérieure au diamètre de l'élément porteur du câble de déplacement (T).

7. Ensemble de serrage de câble de déplacement selon une des revendications précédentes, dans lequel l'ensemble de serrage de câble de déplacement comprend une plaque de fixation de serrage où ledit premier élément de plaque (11) est fixé avec un moyen de fixation, tels que des boulons et des écrous.

8. Ensemble de serrage de câble de déplacement selon une des revendications précédentes, dans lequel l'ensemble de serrage de câble de déplacement comprend une plaque de fixation de serrage comprenant un ou plusieurs serrages de coin pour gérer la boucle de câble.

9. Ensemble de serrage de câble de déplacement selon une des revendications précédentes, dans lequel la plaque de fixation, les premier et second éléments de plaque (11, 11'), les éléments d'espacement, les serrages de coin, et le blocage réglable sont faits en matériau métallique, par exemple en acier ou en aluminium.

10. Ensemble de serrage de câble de déplacement selon une des revendications précédentes, dans lequel la plaque de fixation, le premier élément de plaque, le second élément de plaque (11'), les éléments d'espacement, et/ou les serrages de coin sont faits en matériau non-métallique, tel qu'en plastique, en matériau composite polymère renforcé par des fibres de carbone ou de verre.

11. Agencement d'agenceur, ledit ascenseur étant installé dans un bâtiment et applicable au transport de passagers et/ou transport de marchandises pendant la fabrication d'un ascenseur, comprenant :
- une gaine d'ascenseur (S),
- au moins une unité d'ascenseur (C, CW) mobile dans la gaine (S), comportant au moins une cabine d'ascenseur (C),
une première structure support mobile (2) dans la gaine (S) pour supporter ladite au moins une unité d'ascenseur mobile dans la gaine,
- un câble de déplacement (T), dont la largeur est supérieure à son épaisseur dans une direction transversale de câble, comprenant une gaine isolante avec une première surface plane et une seconde surface plane, des conducteurs pour transmettre l'énergie électrique et des données entre la cabine d'ascenseur (C) et la base de fixation, telle que la première structure support mobile (2) dans la gaine (S) pour supporter ladite au moins une unité d'ascenseur (C, CW) mobile dans la gaine (S), et un ou plusieurs éléments porteurs sensiblement de la longueur du câble de déplacement (T) pour fixer le câble de déplacement (T) au niveau de sa première extrémité à la cabine d'ascenseur (C) et au niveau de sa seconde extrémité à la base de fixation,
- un serrage de câble de déplacement,
dans lequel le câble de déplacement (T) est fixé à la base de fixation, telle qu'à la première structure support mobile (2) dans la gaine (S) par l'ensemble de serrage de câble de déplacement selon une des revendications précédentes.

12. Agencement d'agenceur selon la revendication 11, **caractérisé en ce que** la première structure support mobile (2) dans la gaine (S) pour supporter ladite au moins une unité d'ascenseur (C, CW) mobile dans la gaine (S) comprend un centre de commande d'ascenseur et une machine de levage.

13. Procédé de construction d'un ascenseur, ledit ascenseur étant agencé pour comprendre, pendant la durée de la construction :
- une gaine d'ascenseur (S),
- au moins une unité d'ascenseur (C, CW) mobile dans la gaine (S), comportant au moins une cabine d'ascenseur,
- une première structure support mobile (2) dans la gaine (S) au-dessus de la cabine d'ascenseur, pour supporter ladite au moins une unité d'ascenseur (C, CW), un câble de déplacement (T) pour transmettre l'énergie électrique et des données entre la cabine d'ascenseur et la base de fixation, telle que la première structure support mobile (2),
- un serrage de câble de déplacement,
dans lequel procédé, au moins les étapes suivantes sont exécutées :
a) la cabine d'ascenseur est utilisée pour transporter des passagers et/ou des marchandises, et ensuite
b) la première structure support mobile (2) est levée plus haut dans la gaine (S), puis
c) la cabine d'ascenseur est à nouveau utilisée pour transporter des passagers et/ou des marchandises,
dans lequel le procédé comprend en outre l'étape x dans laquelle le serrage de câble de déplacement fixant le câble de déplacement (T) à la base de fixation, telle qu'à la première structure support mobile (2), est libéré et le câble de déplacement (T) est déployé dans sa longueur, le câble de déplacement (T) étant déployable de manière continue sur sa longueur entre la cabine d'ascenseur et la base de fixation, et dans lequel le câble de déplacement (T) est fixé à sa base de fixation par l'ensemble de serrage de câble de déplacement selon une des revendications 1 à 10.

14. Procédé selon la revendication précédente 13, dans lequel dans l'étape x un câble de déplacement (T) est placé pour se déployer dans la gaine (S), par exemple en le laissant tomber dans la gaine (S), et en faisant sortir le câble (T) d'un rouleau à câble tournant in situ sur une crémaillère d'enroulement placée à proximité, par exemple sur le dessus de la première structure support mobile (2) dans la gaine (S).

15. Procédé selon la revendication 13 ou 14, dans lequel les étapes a à c et x sont exécutées plusieurs fois pour obtenir plus de place par paliers en dessous de la première structure support mobile (2), et après avoir exécuté les étapes a à c et x, une étape est exécutée, où la seconde structure support (5) est déplacée depuis une position de montage antérieure au-dessus de la structure de toit vers le haut jusqu'à une position de montage plus élevée dans la gaine (S) pour les étapes suivantes a à c, x, après quoi au moins les étapes a à c, et x sont à nouveau exécutées.
